(19) Europäisches Patentamt
European Patent Office
Office européen des brevets

(11) Publication number: 0 056 523
A2

(12) # EUROPEAN PATENT APPLICATION

(21) Application number: 81306004.3

(22) Date of filing: 21.12.81

(51) Int. Cl.[3]: C 09 B 67/46
D 06 P 1/613, C 09 D 17/00
B 01 F 17/00

(30) Priority: 14.01.81 GB 8101013

(43) Date of publication of application: 28.07.82 Bulletin 82/30

(84) Designated Contracting States: BE CH DE FR GB IT LI

(71) Applicant: IMPERIAL CHEMICAL INDUSTRIES PLC
Imperial Chemical House Millbank
London SW1P 3JF(GB)

(72) Inventor: Rothwell, Geoffrey Richard
76 Arnside Avenue
Chadderton Lancashire OL9 9DJ(GB)

(72) Inventor: Schofield, John David
37 Rudgwick Drive
Bury Lancashire(GB)

(74) Representative: Pugsley, Roger Graham et al,
IMPERIAL CHEMICAL INDUSTRIES PLC Legal Department: Patents Thames House North Millbank
London SW1P 4QG(GB)

(54) **Aqueous dispersions.**

(57) Aqueous dispersions of solids, especially dyestuffs and pigments, containing, as dispersing agent, a compound of the formula:

$$\left(R-[Y-(C_3H_6O)_m-(C_2H_4O)_{n-1}-C_2H_4]_q\right)_p\!\!-XM_r \qquad (I)$$

wherein

R is an aryl or arylene group which is free from aliphatic substituents containing 6 or more carbon atoms;
Y is $-O-$, $-CH_2O-$ or $-CO.O-$;
m + n is from 3 to 30;
p is from 1 to 3;
q is 1 or 2;
X is $SO_4$ and r is 2–p, or X is $PO_4$ and r is 3–p;
and
M is H, $NH_4$, a substituted ammonium radical or an alkali metal.

The dispersions are suitable for the preparation of print pastes based upon synthetic or natural thickening agents. The dispersions containing disperse dyestuffs are also suitable for the continuous dyeing of cellulose/polyester blends in conjunction with vat or cellulose reactive dyestuffs.

EP 0 056 523 A2

COMPLETE DOCUMENT

This invention relates to aqueous dispersions of water-insoluble solids, especially pigments, dyestuffs and optical brightening agents.

It has been normal practice in the printing of polyester textile materials with disperse dyestuffs to thicken the print pastes with materials of natural origin, such as alginates, but dissatisfaction with their technical performance coupled with a general world shortage of these "natural" thickeners has led to an increase in the use of certain "synthetic" thickening agents, such as polyacrylic acid and its derivatives and homologues, which have recently become available. Although these synthetic thickeners are generally superior to the established natural thickeners in many respects, they have one serious defect in that the viscosity of print pastes made with these thickeners is very sensitive to the presence of ionic species which generally cause a severe depression of viscosity. This defect has caused problems in the use of synthetic thickeners with print pastes containing disperse dyestuffs. These latter are usually dispersed with anionic dispersing agents and the dispersions therefore contain large quantities of ionic species.

The depression of viscosity of print pastes based on synthetic thickeners when ionic species are added can be overcome to some extent by increasing the quantity of the synthetic thickener but this reduces the commercial acceptability of these thickeners because an important advantage of synthetic thickeners over the natural thickeners is the smaller concentration required, hence the lower cost, to achieve a given viscosity, in the absence of ionic species. A lower level of thickener concentration is also technically desirable because this reduces the amount of washing off required and also reduces interference in the absorption of dyestuff by the textile material.

In order to accomodate disperse dyestuff dipsersions in print pastes containing synthetic thickeners it has been proposed to replace the anionic dispersing agents with non-ionic

dispersing agents, see for example UK 1537374. Non-ionic agents have, of course, been used for many years in the stabilisation of pigment dispersions but few of the established non-ionic agents have proved to be satisfactory for the preparation of dispersions of disperse dyestuffs and particularly such dispersions which are designed for incorporation in print pastes based on synthetic thickeners.

It has been proposed, in Japanese Patent Specification (Kokai) No.54-30220 (Hodogaya) to prepare aqueous dispersions of perchlorate salts of basic dyestuffs using poly(ethylene-oxy) derivatives of phenols and naphthols and to use such dispersions in aqueous print pastes containing natural or synthetic thickeners. The print pastes based on synthetic thickeners however contained sufficient thickener (15 to 20%) to have thickened a conventional dispersion of a disperse dystuff containing an anionic dispersing agent. Furthermore the present applicants have found that the dispersions disclosed in the Japanese specification cannot be used to prepare print pastes of acceptable viscosity unless excessive quantities of thickener are used i.e. from about 5 to 10 times the normal usage.

A serious defect of dispersions based upon non-ionic agents, hereinafter referred to as "non-ionic dispersions", is that they are not sufficiently stable to withstand the more exacting conditions involved in dyeing processes, e.g. higher temperatures, and they may also adversely affect the performance of vat and cellulose reactive dyes which are frequently used in conjunction with disperse dyes in the colouration of polyester/cellulose blends.

It has been proposed in Japanese Patent Specification (Kokai) No. 53006689 (Kao Soap) to prepare dispersions of disperse dyestuffs using as dispersing agents phosphated or sulphated condensates of aromatic compounds with a lower alkylene oxide, the condensates containing at least 35 alkylene-oxy units.

It has also been proposed, for example in UK 1518434, UK 2035384A and OLS 2614257, to add aliphatic or long-chain alkylphenol sulphated or phosphated ethylene oxide adducts to conventional dispersions of disperse dyes containing anionic dispersing agents in order to improve the storage stability of the dispersions or to reduce the explosion hazards during drying. In UK 1518434 it is also stated that the use of such agents in conventional dispersions enhances the colour yield during pad dyeing.

It has now been found that dispersions of disperse dyes which are compatible with synthetic thickening agents and which are also suitable for use in the continuous dyeing of polyester and polyester/cellulose textile materials can be prepared using, as dispersing agents, certain aromatic compounds carrying phosphate or sulphate groups. These agents are also suitable for use in the preparation of dispersions of other solids. The agents are are hereinafter referred to as "crypto-ionic" to distinguish them from the truly anionic agents which have much stronger ionic activity and from the non-ionic agents which have no ionic activity.

According to the present invention there is provided an aqueous dispersion of a finely-divided, water-insoluble solid containing a water-soluble, crypto-ionic dispersing agent of the formula:

$$\left(R-[Y-(C_3H_6O)_m-(C_2H_4O)_{n-1}-C_2H_4]_q\right)_p(-XM)_r \qquad (I)$$

wherein R is an aryl or arylene group which is free from aliphatic substituents containing 6 or more carbon atoms;

Y is -O-, $-CH_2O-$ or -CO.O-;

m + n is from 3 to 30;

p is from 1 to 3;

q is 1 or 2;

X is $SO_4$ and r is 2-p, or X is $PO_4$ and r is 3-p;
and M is H, $NH_4$, a substituted ammonium radical or an alkali metal.

The aryl or arylene group represented by R preferably comprises a single benzene ring or a pair of benzene rings which are fused or linked together either directly or indirectly. The benzene rings may be substituted by non-hydrophilic groups other than aliphatic chains containing 6 or more carbon atoms and as examples of such substituents there may be mentioned halogens, particularly chlorine and lower ($C_1$ to $C_4$) alkyl groups. Examples of radicals represented by R are phenyl, tolyl, xylyl, chlorophenyl, phenylphenyl, diphenylene, 2,2-bis(4-phenylene) propane (2,2-b-4-pp), from bis-phenol A, and naphthyl.

As examples of the substituted ammonium radicals represented by M there are those derived by neutralisation of aliphatic and aromatic amines and hydroxyamines, which are free from aliphatic chains containing more than 6 carbon atoms, such as $C_1$ to $C_4$-alkylamines, $C_1$ to $C_4$-hydroxyalkylamines, arylamines and pyridine. A preferred species of M is the triethanolammonium radical.

It is preferred that $n > m$ and that the sum of n and m is from 3 to 25 and more especially from 4 to 15. It is also preferred that m is not greater than 5 and more preferably is zero and that n is from 5 to 10. The dispersing agent may comprise a mixture of compounds in which p is from 1 to 3.

The crypto-ionic agents may be prepared in a known manner by reacting the appropriate alkylene oxide or oxides with a compound of the formula:

$$R - (Y - H)_q \qquad \text{(II)}$$

wherein R, Y and q have the meanings defined hereinbefore, and esterifying the polyalkylene oxide condensate with an appropriate oxyphosphorus or oxy-sulphur compound, for example, phosphorus

pentoxide, chlorosulphonic acid and sulphamic acid. Synthetic methods are described in further detail in "Surface Active Ethylene Oxide Adducts" by N.Schonfelt (Pergamon, 1969), Organophosphorus Compounds by G.M.Kosolapoff (Wiley, 1950) and USP 2758977 (Knowles et al).

Although the dispersions are particularly suitable for use with synthetic thickeners in the preparation of print pastes and so the preferred solids are disperse dyestuffs, the dispersing agents of formula (I) are also suitable for use in the preparation of dispersions of other solids such as pigments, particularly organic pigments, optical brightening agents and anthraquinone, the dispersion of anthraquinone being suitable for use in wood pulping operations for promoting delignification.

As examples of the water-insoluble dyestuffs and pigments which may be incorporated in the present dispersions there are mentioned non-ionic, organic pigments and disperse dyestuffs of the azo, anthraquinone and phthalocyanine series and inorganic pigments such as metal oxides, iron blues and cadmium yellows.

In addition to the dispersing agent of formula (I) and the water-insoluble solid the dispersion may contain other additives such as anti-microbials, humectants and other surfactants. If the dispersion is to be used in the preparation of a print paste containing a synthetic thickener it is preferred that such additives are non-ionic in order to avoid depression of the viscosity of the print paste.

The dispersion preferably contains from 5% to 70%, by weight of the solid, based on the total weight and from 5% to 100%, by weight of the dispersing agent, based on the weight of the solid, especially preferred ranges being from 10% to 60% and from 10% to 70% respectively.

The mean diameter of the particles of the solid is preferably below 5 microns and more preferably below 3 microns.

The present dispersion may be prepared by any method for the preparation of finely divided dispersions of solids in aqueous media, for example, by grinding the solid together with the dispersing agent in water in a bead or a ball mill until the mean particle diameter of the solid is below 5 microns and more preferbably below 3 microns.

As indicated hereinbefore the dispersions of the present invention, wherein the solid is a colourant, i.e. a pigment or a dyestuff, are particularly suitable for the preparation of print pastes and according to a further feature of the present invention there is provided an aqueous print paste comprising a finely-divided water-insoluble inorganic or non-ionic organic colourant, a dispersing agent of Formula (I) and a thickening agent.

The term "thickening agent" includes both natural and synthetic thickening agents and preferred print pastes are those containing a disperse dyestuff and a thickening agent, especially a synthetic thickening agent. The term "synthetic thickening agent" includes all those agents, suitable for the thickening of print pastes, which are not derived directly from natural products and, as examples there may be mentioned polyacrylates, such as polyacrylic acid and its derivatives and homologues, polyvinyl alcohol and ethylene/maleic anhydride co-polymers. The term "natural thickening agent" includes all those agents, suitable for the thickening of print pastes, which are derived directly from natural products and, as examples of natural thickening agents there may be mentioned, locust bean/mannogalactau gum, guar gum (mannogalactan), sodium alginates, polysaccharides, starch ethers, hydroxylated and carboxylated starch ethers and oil-in-water emulsions.

Although the present dispersions have been developed, like the wholly non-ionic dispersions, to cope with the increasing use of synthetic thickening agents they show advantages over both the conventional anionic dispersions and the

more recently developed non-ionic dispersions in print pastes based upon natural thickeners in terms of better colouration yields and/or better dispersion stability in the print paste.

A print paste based on a natural thickening agent preferably contains from 4% to 5% of the thickening agent whereas one based on a synthetic thickening agent preferably contains from 0.5% to 1.5% of the thickening agent. The weight of colourant may vary within wide limits depending on the depth of shade of print required and preferred proportions of the dispersing agent, in relation to the colourant, are those indicated hereinbefore in respect of the dispersions.

The print paste may be prepared in any convenient manner, a preferred method, in the case of a disperse dyestuff dispersion, being to dilute the dispersion with water and to add a concentrated solution of the thickening agent with vigorous agitation. Any other ingredients, such as wetting agents, fixation promotors and preservatives, may then be added to the paste.

The present dispersions, in which the solid is a disperse dyestuff, are also suitable for use in the continuous dyeing of polyester textile materials and, in conjunction with suitable vat or cellulose reactive dyestuffs, in the continuous dyeing of polyester/cellulose blends. In the dispersions designed for use in continuous dyeing it is preferred to use agents of formula (I) in which p is 1.

In continuous dyeing procedures it has been found that the present dispersions are superior to non-ionic dispersions because the former are more resistant to flocculation in the padding liquor under normal continuous dyeing conditions.

It has also been found in the continuous dyeing of polyester/cellulose blends with mixtures of disperse and vat dyes that the present dispersions are superior to non-ionic dispersions because the latter restrain the vat dyes and reduce the yield of these dyes on the cellulose portion of the blend.

An important advantage of the present dispersions over conventional anionic dispersions is that they do not stain either polyester materials or adjacent textile materials which may be coloured in conjunction with polyester. This means that the present dispersions permit the attainment of brighter shades both on polyester material and adjacent materials than is possible with most anionic dispersions which stain textile materials.

All aqueous dispersions tend to lose water by evaporation leading to an increase in concentration and ultimately to the deposition of dry solid. To reduce the tendency for evaporation it is customary to add a humectant, usually a polyol, to the dispersion. The most popular humectants are those like glycerol, ethylene glycol and sorbitol, which are rich in primary hydroxyl groups because they not only inhibit evaporation but also assist in the protection of the dyestuff particles if drying out occurs. A serious problem with such humectants is that they compete with cellulose for cellulose reactive dyes, when these are used in conjunction with disperse dyestuffs for the colouration of polyester/cellulose blends, and thus reduce the yield of the cellulose reactive dye on the cellulose. It is therefore desirable to move away from these humectants to those which are much less reactive with cellulose reactive dyestuffs. Suitable less-reactive humectants are those low in, or free from, primary hydroxyl groups, such as propylene glycol and dipropylene glycol. Unfortunately these humcectants are incompatible with the conventional anionic dispersing agents when there are only small amounts of water present, i.e. when drying out of the dispersion has occurred, and this results in the failure of the dye to redisperse after the dispersion has dried out. This failure to redisperse leads, in practice, to specking of the textile material during printing and dyeing. The crypto-ionic agents used in the present invention are compatible with a wide range of humectants, including propylene and dipropylene glycols, when loss of water occurs. Thus formulations

prepared from the present crypto-ionic agents and these preferred humectants can readily be redispersed, after drying out, by gentle agitation in water. As they contain the less reactive humectants, these dispersions have a reduced effect on the dyeing yields of cellulose reactive dyes during the one-bath, continuous dyeing of polyester/cellulose blends.

Although most commercially-available aqueous dispersions of disperse dyestuffs contain humectants to reduce evaporation, in normal commercial practice it is virtually impossible to prevent evaporation and almost inevitably the user, the dyer or printer, will be faced with the need to redisperse dried out material. The redispersibility of dyestuffs sold in a liquid dispersion is therefore a commercially important property. The crypto-ionic agents used in the present dispersions give particularly good protection against drying out so that merely stirring the dried out solid back into the dispersion, or added water, is sufficient to give a fine, deflocculated dispersion which will give dyeings and printings substantially free from specks.

The invention is further illustrated by the following Examples. Unless otherwise stated, all parts and percentages are by weight.

Example 1

14.4 G of the dispersing agent of Formula (I) wherein R is naphth-2-yl, Y is -O-, m is 0, n is 10, q is 1, p is 1, X is $PO_4$ and M is H, were dissolved in 20 g of water. The pH was adjusted to 7.0 by the addition of 12.4 g of a 10% solution of KOH and 1.2 g of a 20% solution of potassium 2-phenylphenate. 11.4 G of water and 16.1 g of dipropylene glycol (humectant) were then added to the solution.

44.5 G of a press paste of the dyestuff, 2-acetylamino-4-[N,N-di(beta-methoxycarbonyl-ethyl)amino]-4'-nitroazobenzene, containing 24 g of dyestuff and 20.5 g of water were homogenised into the above solution by mixing for 10 minutes with a high shear (Silverson) mixer.

The dyestuff slurry was stirred in a stainless steel, water-cooled vessel with 360 g of 0.35 to 0.5 mm diameter glass beads. Agitation was effected by three axially-aligned 60 mm diameter nylon discs mounted 25 mm apart on a common stainless steel shaft rotating at 3000 revolutions per minute. After 40 minutes agitation the mean diameter of the dyestuffs particles was below 2 microns and the dispersion was deflocculated.

The dispersion, containing 20% dyestuff and 16% dispersing agent was separated from the glass beads by filtration through a nylon mesh with 50 micron pores.

Example 2

The procedure of Example 1 was repeated using as dispersing agent the triethanolamine salt of the dispersing agent used in Example 1 with the addition of 0.1 g of an antifoaming agent (Synprol 6PO). The dispersion was ground for a period of 50 minutes after which the mean diameter of the dyestuff particles was less than 2 microns and the dispersion was deflocculated.

Example 3

The procedure of Example 2 was repeated omitting the antifoaming agent but adding 0.25 g of xanthanpolysaccharide (Kelzan S), under high speed agitation, to the milled dispersion.

Example 4

40 G of the dispersing agent described in Example 1 were added to 89 parts of water contained in a 1 litre vessel. The pH was adjusted to 7.0 using a 40% aqueous solution of triethanolamine. To this solution were added 56 g of dipropylene glycol (humectant) and 4 g of a 20% aqueous solution of sodium 2-phenylphenate and the pH re-adjusted to 7.0 with dilute acetic acid.

121.2 G of a press paste of the dyestuff, 2-chloro-4-nitro-6-bromo-4'-N:N-bis(2-methoxycarbonylethyl)aminoazobenzene containing 80 parts of dyestuff and 41.2 parts of water,

were stirred into the above solution together with sufficient water to raise the contents of the vessel to 400 g and the slurry homogenised for 20 minutes with a high shear mixer (Silverson).

The slurry was milled with 1200 g of glass beads (Ballotini No. 8, 0.3 - 0.5 mm diameter)in a 2 litre stainless steel vessel using a rotor fitted with three 10.3 cm diameter nylon discs set 2.3 cm apart, the rotor revolving at 1840 rpm (peripheral speed - 12 m/sec) until the mean diameter of the dyestuff particles, determined by microscopic examination, was between 1 and 3 microns. The milled dispersion was separated from the beads by filtration through nylon mesh with 25 micron pores. This dispersion is hereinafter referred to as Dispersion E4.

Example 5

The procedure of Example 4 was repeated except for an increase in the quantity of the dispersing agent to 48 g and the replacement of the 121.2 g of dyestuffs press paste by 148.2 g of a press paste of the dyestuff described in Example 1 containing 80 parts of dyestuff and 68.2 parts of water. This dispersion is hereinafter referred to as Dispersion E5.

Example 6

44.2 G of the dispersing agent described in Example 1 were dissolved in 64 parts of water and the pH adjusted to 7.0 with a 40% aqueous solution of triethanolamine. To this solution were added 50 g of dipropylene glycol (humectant) and 4 g of a 20% aqueous solution of sodium 2-phenylphenate and the pH re-adjusted to 7.0 with dilute acetic acid.

174.6 G of a press paste of the dyestuff, 3[4-(β-[β-methoxyethoxy]ethoxycarbonyl)phenylazo]-4-methyl--5cyano-6-hydroxy-N-ethylpyrid-2-one, containing 110 g of dyestuff, were added to this solution together with sufficient water to raise the total slurry to 400 g. The slurry was homogenised and milled as described in Example 4 and is hereinafter referred to as Dispersion E6.

Example 7

33 G of the dispersing agent described in Example 1 were dissolved in 66 g water and the pH adjusted to 7.0 with a 1M aqueous solution of KOH. To this solution are added 57.8 g of glycerol (humectant) and 4 g of sodium 2-phenylphenate and the pH readjusted to 7.0 with dilute acetic acid.

173.3 G of a press paste of the dyestuff, 2-bromo-4,6-dinitro-2'acetylamino-5'-methoxy-4'-N-β-(β-methoxyethoxy-carbonyl)ethylaminoazobenzene containing 66 g of dyestuff, were added to this solution together with sufficient water to raise the total slurry to 400 g. The slurry was homogenised and milled as described in Example 4 and is hereinafter referred to as Dispersion E7.

Examples 8 to 33

For each Example set out in Table 1, 14.4 g of the dispersing agent defined in the Table 1 were dissolved in 20 g of water, 1.2 g of sodium 2-phenylphenate, 11.4 g water and 16.1 g humectant were added and the pH adjusted to 7.0 with KOH, NaOH or triethanolamine respectively, according to whether M is K, Na or T in the Table. To each solution were added 44.5 g of the press paste described in Example 1 and the slurry homogenised and milled according to the procedure described in Example 1. These dispersions are hereinafter referred to by the Example number preceded by the letter "E".

Table 1

| Example | R | m | n | p/q | X | M |
|---|---|---|---|---|---|---|
| 8 | naphth-2-yl | 0 | 5 | 1/1 | $PO_4$ | K |
| 9 | " | 0 | 5 | 1/1 | " | Na |
| 10 | " | 0 | 5 | 1/1 | " | T |
| 11 | " | 0 | 15 | 1/1 | " | T |
| 12 | " | 5 | 10 | 1/1 | " | T |
| 13 | 2-phenylphenyl | 0 | 5 | 1/1 | " | T |
| 14 | " | 0 | 5 | 1/1 | " | Na |
| 15 | " | 0 | 5 | 1/1 | " | K |
| 16 | " | 0 | 10 | 1/1 | " | T |
| 17 | " | 0 | 10 | 1/1 | " | Na |
| 18 | " | 0 | 10 | 1/1 | " | K |
| 19 | phenyl | 0 | 10 | 1/1 | " | T |
| 20 | 2,2-b-4-pp | 0 | 10 | 1/2 | " | T |
| 21 | naphth-2-yl | 0 | 10 | 1/1 | " | Na |
| 22 | " | 0 | 10 | 1.5/1 | " | Na |
| 23 | " | 0 | 10 | 2/1 | " | Na |
| 24 | " | 0 | 5 | 1/1 | $SO_4$ | K |
| 25 | " | 0 | 10 | 1/1 | " | K |
| 26 | 2-phenylphenyl | 0 | 5 | 1/1 | " | K |
| 27 | " | 0 | 10 | 1/1 | " | K |
| 28 | " | 0 | 10 | 1.5/1 | $PO_4$ | Na |
| 29 | " | 0 | 10 | 1.5/1 | " | K |
| 30 | " | 0 | 10 | 1.5/1 | " | T |
| 31 | " | 0 | 5 | 1.5/1 | " | Na |
| 32 | " | 0 | 5 | 1.5/1 | " | K |
| 33 | " | 0 | 5 | 1.5/1 | " | T |

Examples 34 to 44

The dispersions defined in the Examples of Table 2 were made by the general method of Example 1 but using the indicated dyes and dispersing agents in place of the dye and dispersing agent used in Example 1.

Table 2

| Example | Dye from Example | %.Dye | Agent from Example | % Agent on Dye |
|---|---|---|---|---|
| 34 | 4 | 20 | 10 | 50 |
| 35 | 4 | 20 | 13 | 50 |
| 36 | 4 | 20 | 16 | 50 |
| 37 | 6 | 27.5 | 10 | 40 |
| 38 | 6 | 27.5 | 13 | 40 |
| 39 | 6 | 27.5 | 16 | 40 |
| 40 | 10 | 20 | 10 | 50 |
| 41 | 10 | 20 | 10 | 40 |
| 42 | 10 | 20 | 10 | 30 |
| 43 | 10 | 20 | 10 | 20 |
| 44 | 10 | 20 | 10 | 10 |

Examples 45

The procedure of Example 4 was repeated except that the quantity of dispersing agent was raised to 48 g (i.e. 60%, by weight based on the quantity of dyestuff). This dispersion is hereinafter referred to as Dispersion E45.

Example 46

The procedure of Example 45 was repeated except that the humectant, dipropylene glycol, was replaced by the same amount of glycerol. This dispersion is hereinafter referred to as Dispersion E46.

Example 47

A pigment suspension was prepared by mixing 50 g of a β-form phthalocyanine pigment (C.I. Pigment Blue 15:3) into a solution of 10 g the dispersing agent of Example 1 in 45 g of water. The suspension was milled for 20 minutes in a bead mill after which it was in a fluid and deflocculated form and superior in performance to a conventional pigment dispersion prepared using a non-ionic dispersing agent (a condensate of nonyl-phenol with 13 moles of ethylene oxide).

Example 48

The procedure of Example 45 was repeated except that the pigment was replaced with 50 g of a polychlorinated phthalocyanine green pigment (C.I. Pigment Green 7). The resulting dispersion was fluid and deflocculated and superior in performance to a conventional pigment dispersion prepared using the non-ionic dispersing agent identified in Example 45.

Example 49

A suspension was prepared by dissolving 50 g of anthraquinone in a solution of 2.5 g of the dispersing agent used in Example 1 dissolved in 47.5 g water. after milling for 5 in a bead mill a fluid and deflocculated dispersion of anthraquinone is produced suitable for use as an promotor in the delignification of wood pulp.

Comparative Dispersions

The dispersions of Table 3 are not Examples of the present invention and were prepared for comparison with the dispersions according to the present invention using the general method of the indicated Example but with the agent of the Example replaced by the indicated amount of the stated dispersing agent. Details of the comparative dispersing agents are given in Table 4. The dispersions of Table 3 are hereinafter referred to by their number with the suffix CD.

Table 3

| Comparative Disp (CD) | Method of Example | Agent | % Agent on dye | Type |
|---|---|---|---|---|
| 1 | 1 | A | 20 | crypto |
| 2 | 4 | B | 80 | non-ionic |
| 3 | 5 | B | 80 | " |
| 4 | 6 | B | 80 | " |
| 5 | 4 | C | 50 | anionic |
| 6 | 5 | C | 50 | " |
| 7 | 6 | C | 50 | " |
| 8 | 8 | C | 60 | " |
| 9 | 8 | D | 60 | anionic |
| 10 | 8 | E | 60 | crypto |
| 11 | 8 | F | 60 | crypto |
| 12 | 8 | G | 60 | crypto |
| 13 | 7 | H | 50 | crypto |
| 14 | 8 | H | 60 | crypto |

Notes for Table 3:

(1) The slurry produced when the dye was added to the solution of dispersing agent during the preparation of CD 13 was so thick that it could not be milled and thus it was not possible to actually prepare CD 13.

(2) CD10, CD11, CD12 and CD14 were extremely frothy and although they could be milled in the laboratory they would cause severe problems in normal commercial scale manufacture.

Table 4

| Agent Code | Agent Identity |
|---|---|
| A | Formula I (m=0,n=50,p=2,X=$PO_2$,M=T,R=naphth-2-yl) |
| B | 2-Naphthol/10 moles ethylene oxide condensate |
| C | Aromatic sulphonic acid/formaldehyde condensate |
| D | Lignosulphonate |
| E | 4-nonylphenol/4 moles ethylene oxide condensate |
| F | 4-nonylphenol/8 moles ethylene oxide condensate |
| G | 4-nonylphenol/14 moles ethylene oxide condensate |
| H | phosphated condensate of 4-nonylphenol with 9 moles ethylene oxide |

Comparative Dispersions 15 to 20

The procedure of Example 45 was repeated with the dispersing agent replaced by the same quantity (i.e. 60% by weight based on the weight of dye) of the dispersing agents identified in Table 5 and with the humectant replaced by the same proportion of the humectants (i.e. 20% of the aqueous phase in the dispersion) identified in Table 5

Table 5

| Comparative Dispersion (CD) | Agent | Humectant |
|---|---|---|
| 15 | D | DPG |
| 16 | J | DPG |
| 17 | C | DPG |
| 18 | D | G |
| 19 | J | G |
| 20 | C | G |

Agent J is a naphthalene sulphonic acid/formaldehyde condensate

Assessment of Dispersions and Comparative Dispersions

In these assessments of the Dispersions and Comparative Dispersions the following tests, recipes and procedures were employed.

Test 1 - Dispersibility Test

The quantity of a dispersion which contains 20 g of single strength colour was added to 400 g water in a beaker and stirred for a fixed period with a standardised stirrer (the same stirrer and stirring period was used for every assessment). After stirring the dispersion was allowed to stand for 30 seconds and the top 300 g of material decanted, the remainder being filtered through a filter cloth with a mean pore size of 25 microns, under a slight vacuum. The cloth was then air dried and any deposition assessed on a 1 to 5 scale analogous to the Standard Grey Scale in which the rating 1 indicated a complete absence of deposit and the rating 5 a thick deposit over the cloth. For commercial acceptibility, i.e. to pass this test, a dispersion must achieve a rating of 2-3 or lower. Ratings of 3 or above are recorded as failures.

Test 2 - Redispersibility Test

A standard quantity (2g) of each dispersion was placed in a 250 ml beaker and swirled around the side until the side of the beaker was evenly wetted by the dispersion to a height of 1". The beaker was then stored at room temperature until dry to a constant weight. The dry product was then redispersed in 100 ml water at 55°C by repeated transfer of the liquor between two beakers until no further deposited material was removed from the side and base of the beaker. The redispersed material was then filtered, under vacuum, through two 7 cm Whatman No 4 filter papers dressed over a 6 cm diameter 100 mesh gauze and the papers air dried. The deposition was assessed on a 1 to 5 scale as in Test 1, with rating 1 indicating complete redispersion and the absence of any coarse particles and rating 5 indicating incomplete redispersion, i.e. material remaining on side or base of beaker and a heavy deposit of coarse particles on the filter paper. To pass this test a dispersion must achieve a rating of 2-3 or lower. Ratings of 3 or above are recorded as failures.

Print Pastes

Recipe 1 - Print Paste with Natural Thickener

| | | |
|---|---|---|
| Dispersion | X parts | |
| Thickener | 500 parts | (10% solution of sodium alginate) |
| Fixing Agent | 20 parts | (butyl ricinoleate) |
| Wetting Agent | 20 parts | (aqueous emulsion of sulphonated sperm and pine oils) |
| Water | (460 - X) parts | |
| | 1000 parts | |

The dispersion was diluted with the water and the thickener stirred into this mixture. Finally the other ingredients were mixed into the paste.

Recipe 2 - Print Paste with Synthetic Thickener

| | | |
|---|---|---|
| Dispersion | X parts | |
| Thickener | 650 parts | (4.6% solution of clear concentrate of polyacrylic acids containing from 15 to 30% actual thickener - Acraconc 276) |
| Water | (350 - X) parts | |
| | 1000 parts | |

The dispersion was diluted with the water and the thickener stirred into the mixture.

Before printing pale shades, for the assessment of printing quality, these print pastes were reduced in strength with the following reduction pastes:

| Natural | | Synthetic | |
|---|---|---|---|
| Fixing Agent | 20 parts | Thickener | 650 parts |
| Wetting Agent | 20 parts | Water | 350 parts |
| Thickener | 500 parts | | 1000 parts |
| Water | 460 parts | | |
| | 1000 parts | | |

The quantity of dispersion used, (X) parts, was fixed in accordance with the inherent dyeing sthrength of the dye incorporated in the dispersion.

The print pastes were applied to polyester crepe material by roller printing. The pale shade prints were assessed for the presence or absence of specks of undispersed colour on a 1 to 5 scale as follows:

| | | |
|---|---|---|
| 1: speck free | 2: trace specky | 3: litle specky |
| 4: specky | 5: very specky | |

Prints having a rating of 2 or lower are generally commercially acceptable although slightly higher ratings may be acceptable in the case of some dyes, such as navies and blacks, which are generally printed in deep shades. In the following assessments only the underlined portions of the above rating comments are used in the tables of results.

Recipe 3 - Print Paste with Synthetic Thickener

| | | |
|---|---|---|
| Dispersion | 5 parts | |
| Thickener | 95 parts | (solution of 2.5% of Lyoprint TFA and 1.0% of Lyoprint TFB in water) |
| | 100 parts | |

Lyoprint TFA is a high molecular weight polyacrylic acid and Lyoprint TFB is a lower molecular weight polyacrylic acid. Both these compounds are obtainable from Ciba-Geigy. (Lyoprint is a trade mark the property of Ciba-Geigy)

The solution of the thickener was stirred into the dispersion.

This print paste was applied to a polyester crepe material using a Zimmer, laboratory, flat bed, printing machine with a bar 6 and a magnet setting of 4. The prints were assessed in the same manner as for Recipes 1 and 2 and the same ratings were used.

In the following Assessments the prefix E indicates that the dispersion is an Example of the invention, the prefix CD indicates that the dispersion is not an Example of the invention but for the purpose of comparison and the suffix A indicates that the dispersion was made according to the method of the appropriate Example or Comaparative Dispersion except for omission of the humectant.

Assessment of Dispersions E10 and E40 to E44

The dispersions were assessed according to Test 1 for dispersibility and Test 2 for redispersibility and samples of the dispersions were converted into print pastes according to Recipe 1 and Recipe 2 and the print pastes assessed for speckiness of print on a polyester crepe fabric. The results of the assessments are summarised in Table 6.

Table 6

| Dispersion and % Agent | Disp'y (Test 1) | Redisp'y (Test 2) | Print quality Recipe 1 | Print quality Recipe 2 |
|---|---|---|---|---|
| E4 50 | pass(1) | pass(1/2) | trace | lit |
| E6 40 | pass(1) | pass(1) | free | free |
| E7 50 | pass(1) | pass(1) | specky | free |
| E10 60 | pass(1) | pass(1) | free | free |
| E40 50 | pass(1) | pass(1) | free | free |
| E41 40 | pass(1/2) | pass(1) | free | free |
| E42 30 | pass(1) | pass(1) | free | specky |
| E43 20 | pass(1) | pass(1) | free | specky |
| E44 10 | pass(1) | pass(2) | free | specky |

The results shown in Table 6 demonstrate that a representative sample of the present dispersions containing a variety of different dyestuffs and dispersing agents give satisafactory prints from print pastes based upon synthetic and natural thickeners and also can be satisfactorily redispersed after drying out.

Assessment of Dispersions E5A, CD8A, CD9A and CD14A

The dispersions were assessed for redispersibility after drying out in accordance with Test 2 in the presence of 20% of various humectants. The results are summarised in Table 7.

Table 7

| Dispersion | Agent type | Humectant | Redispersibility (Test 2) |
|---|---|---|---|
| E5A | crypto | 0 | pass(1) |
| E5A | " | G | pass(1) |
| E5A | " | DPG | pass(1) |
| E5A | " | EG | pass(1) |
| E5A | " | DEG | pass(1) |
| E5A | " | PG | pass(1) |
| CD8A | anionic | G | pass(1) |
| CD8A | " | DPG | fail(5) |
| CD8A | " | EG | fail(5) |
| CD8A | " | DEG | fail(5) |
| CD8A | " | 0 | fail(5) |
| CD9A | " | G | pass(1) |
| CD9A | " | DPG | fail(5) |
| CD9A | " | EG | fail(5) |
| CD9A | " | DEG | fail(5) |
| CD9A | " | 0 | fail(5) |
| CD14A | crypto | G | pass(1) |
| CD14A | " | DPG | fail(5) |
| CD14A | " | PG | fail(4) |
| CD14A | " | 0 | fail(5) |

Note to Table 6: 0 = no humectant
G = Glycerol
DPG = Dipropylene glycol
PG = Propylene glycol
DEG = Diethylene glycol
EG = Ethylene glycol

The results shown in Table 7 demonstrate that a dispersion according to the present invention (E5A) may be satisfactorily redispersed after drying out when formulated without any humectant or with a wide variety of humectants

whereas comparable dispersions based upon anionic agents (CD8A and CD9A) or a closely related, crypto-ionic agent (CD13A) can only be satisfactorily redispersed when formulated with glycerol which competes with cotton for cellulose reactive dyes when the dispersions are used in conjunction with these dyes for the colouration of polyester/cotton blends.

Assessment of Dispersions in Continuous Dyeing

Various of the present and comparative dispersions were used to prepare dyebaths for continous dyeing and samples of polyester textile material were dyed using the dyebaths under conventional continuous dyeing conditions. The dyeings were assessed for colour strength and the results are summarised in Table 8.

Table 8

| Dispersion | Relative Dyeing strength |
|---|---|
| CD5 | 100 |
| E4 | 108.5 |
| E34 | 108.5 |
| E36 | 103 |
| E35 | 103 |
| CD2 | 90.5 |
| CD6 | 100 |
| E5 | 104.5 |
| E10 | 98 |
| E16 | 100 |
| E13 | 103 |
| CD3 | 92 |
| CD7 | 100 |
| E6 | 105 |
| E37 | 105 |
| E38 | 105 |
| E39 | 105 |
| CD4 | 95 |

The results shown in Table 8 demonstrate that a range of

the present dispersions give dyeings which are equal, or even superior, in strength to conventional anionic dispersions (CD5 to CD7), which are known to have good high temperature stability, in contrast to the dispersions based upon non-ionic dispersing agents (CD2 to CD4) which give much lower strength dyeings indicating instability in the dyebath.

Assessment of Dispersions for Redispersibility

Various dispersions falling within the present invention were assessed for redispersibility in accordance with Test 2 and the results are compared in Tables 9 and 10 with the results for certain of the comparative dispersions.

Table 9

| Dispersion | Humectant used | Redispersibility |
|---|---|---|
| E11A | G | pass(1) |
| E12A | G | pass(1) |
| E19A | G | pass(1) |
| E20A | G | pass(1) |
| E23A | G | pass(1) |
| CD1A | G | fail(1) |
| CD10A | G | fail(5) |
| CD11A | G | fail(5) |
| CD12A | G | fail(5) |

Table 10

| Dispersion | Redispersibility with Humectant | | |
|---|---|---|---|
| | PG | DPG | G |
| E11A | pass(1) | pass(1) | pass(1) |
| CD1A | fail(5) | fail(5) | fail(4-5) |

The results in Tables 9 and 10 demonstrate the superiority of a wide range of the present dispersions including many of the different features of the agents of Formula I over dispersions based on closely related agents not falling within the definition of Formula I.

Assessment of Dispersions E4 and E34 to E36 against Dispersions CD2 and CD5 in Dyeing polyester/cotton blends in conjunction with Vat dyes

A pad liquor was made up with the following formula:

| | |
|---|---|
| Dispersion | 32.0 g/l |
| Vat Dye liquid | 20.6 g/l |
| Levelling Agent | 10.0 g/l |

and applied to a polyester/cotton fabric by padding through a horizontal bowl mangle set to give an expression of pad liquor equal to 55% of the fabric weight. The fabric was then dried by passing through an infra-red zone in a baking unit to transfer the disperse dye into the polyester. The vat dye was reduced by padding with a solution of NaOH(80 g/l) and sodium hydrosulphite(80 g/l) and steamed for 60 minutes. Oxidation of the vat dye was carried out in a bath containing sodium perborate(3 g/l) and the fabric then soaped at the boil for 15 minutes. Polyester skeletons were prepared from potions of the dyed materials by dissolving out the cotton with sulphuric acid. The results of the assessments are set out in Table 11.

Table 11

| Dispersion | Relative Dyeing Strengths | |
|---|---|---|
| | Blend | Polyester Skeleton |
| CD5 | 100 | 100 |
| E4 | 95 | 90 |
| E34 | 98 | 100 |
| E35 | 97 | 90 |
| E36 | 100 | 100 |
| CD2 | 75 | 100 |

The results shown in Table 11 demonstrate the restraining effect of the closely related non-ionic ethylene oxide condensate dispersing agents when dispersions containing them are dyed in conjunction with vat dyes. In the case of CD2 which contains as agent a condensate of 2-naphthol with 10 moles of ethylene oxide, the dyeing efficiency is only about 75% of CD,

based on a conventional anionic dispersing agent, whereas the present dispersions E to E , and particularly E, which is a phosphated condensate of 2-naphthol with 10 moles of ethylene oxide, all give dyeing which are equal in strength to that of the anionic dispersion. This assessment thus shows the considerable advantage of the present dispersions over the most closely related non-ionic dispersions.

Assessment of the Agents used for the present Dispersions against Anionic Agents for Staining .

In order to assess their fibre-staining properties, the agents used in Dispersions E4, E10, E13, E16, CD5 and CD9 were applied to a variety of textile fibres under the appropriate conditions for the application of disperse dyes, but with no disperse dye present in the dyebath. This allowed the effect of the agents on the various fibres to be assessed without masking by the dyestuff. The details of the test procedures are summarised in Table 12.

Table 12

| Fibre | Dyeing Conditions | Comments |
|---|---|---|
| 100% polyester | pH 5.5 45 minutes at 130°C | dyed with and without EDTA and with and without a reduction clear |
| 55% polyester/ 45% wool | pH 5.5 45 minutes at 106°C | dyed with and without EDTA |
| 67% polyester/ 33% cotton | pH 5.5 45 minutes at 130°C | dyed with and without EDTA |
| 100% nylon 6,6 | pH 5.0 & 6.0 60 minutes at 96°C | dyed with and without EDTA |

All the dyeings were performed at 4% agent on fibre

The agents used in the dispersions of the present invention all gave negligible staining on all the fibres tested.

The lignosulphonate agent, from CD9, gave severe staining on all the fibres and although the staining of polyester

and polyester/cotton was reduced slightly by the presence of EDTA in the dyebath the staining of nylon at pH 5.0 and polyester wool was unaffected by EDTA. Reduction clearing did reduce the staining on polyester.

The other anionic agent, from CD5, stained all fibres, although less intensely than the lignosulphonate. The stain is fairly insensitive to the presence of EDTA or changes in pH and reduction clearing does not fully remove the stain from polyester.

These result demonstrate the clear advantage of the present agents over the conventional anionic agents which stain not only the fibre being dyed by the dispersion but also adjacent fibres. This advatage allows the production of brighter and clearer shades both on polyester and polyester blends.

Assessment of Dispersions in Printing Applications

Dispersions E45 and E46 were compared with Comarative Dispersions CD15, CD16, CD17, CD18, CD19 and CD20 in print applications using print pastes made in accordance with Recipe 1 and Recipe 3 and the prints, on polyester crepe, assessed for speckiness and print definition. The same eight dispersions were also assessed for their performance in the Dispersibility (1) and Redispersibility (2) Tests. The results of the assessments are shown in Table 13.

Table 13

| Disp | Disp'y | Redisp'y | Print quality | | |
|---|---|---|---|---|---|
| No. | Test 1 | Test 2 | Recipe 1 | Recipe 3 | Def'n |
| E45 | pass(1/2) | pass(1) | free(1) | free(1) | mod/good |
| E46 | pass(1/2) | pass(1) | free(1) | free(1) | mod/good |
| CD15 | fail(3) | fail(5) | specky(4) | specky(4) | poor |
| CD16 | fail(3) | fail(5) | specky(4) | very(5) | poor |
| CD17 | pass(1/2) | fail(5) | lit(3) | lit(3) | poor |
| CD18 | pass(2/3) | pass(1/2) | very(5) | very(5) | poor |
| CD19 | pass(2/3) | fail(5) | very(5) | very(5) | poor |
| CD20 | pass(1) | pass(1/2) | free(1) | free(1) | poor/mod |

The results shown in Table 13 demonstrate that a typical

dispersion according to the present invention is considerably superior to a variety of anionic dispersions in printing applications in combination with two different types of humectant.

Assessment of Dispersions with Different Agents and Humectants in Continuous Dyeing

The same eight dispersions from the previous Assessment were assessed for their performance in the continuous dyeing of a cotton/polyester blend alone and in conjunction with a cellulose reactive dyestuff.

Two 1 litre pad liquors were made up for each dispersion with the following formulae:

| Content | Pad Liquor 1 | Pad Liquor 2 |
|---|---|---|
| Dispersion | 32.0 g/l | 2 g/l |
| Cellulose Reactive Dye | 20.6 g/l | - |
| Levelling Agent | 10.0 g/l | - |
| Fixing Agent | 30.0 g/l | - |
| $NH_4H_2PO_4$ | 4.0 g/l | - |

and both liquors were applied to separate 100 square inch pieces of a 67/33 polyester/cotton blend, by padding with an expression of 55% on weight of fabric. The fabric was dried with IR irradiation and hot air and fixed in a thermosol unit at 220°C. The dyeings for each dispersion with Pad Liquor 1 were assessed for relative dyeing strength and those with Pad Liquor 2 for dyeing quality, i.e. speckiness of the dyed material using the same scale as for the printed samples given above under Recipes 1 and 2. The results are shown in Table 14.

Table 14

| Dispersion | Dyeing Strength Pad Liquor 1 | Dyeing Quality Pad Liquor 2 |
|---|---|---|
| E45 | S 90:100 | free |
| CD15 | S 97:100 | specky |
| CD16 | S 94:100 | very |
| CD17 | S 96:100 | litt |
| E46 | S 92:100 | free |
| CD18 | 100:100 | litt |
| CD19 | 100:100 | specky |
| CD20 | 100:100 | free |

The dyeing strength results demonstrate the higher dyeing yields achievable with the present dispersions compared with comparable anionic dispersions and also the higher yields achievable with dispersions containing DPG as humectant (E45 and CD15-17) compared with those containing glycerol as humectant (E46 and CD18-20). The print quality results demonstrate the superior quality of the dyeings from the present dispersions regardless of of the humectant compared with the dyeings from the anionic dispersions. These results thus demonstrate the greater stability of the present dispersions in the dyebath.

RGP
9.12.81

CLAIMS

1. An aqueous dispersion of a finely-divided, water-insoluble solid containing a water-soluble, crypto-ionic, dispersing agent of the formula:

$$\left(R-[Y-(C_3H_6O)_m-(C_2H_4O)_{n-1}-C_2H_4]_q\right)_p(-XM_r) \qquad (I)$$

wherein R is an aryl or arylene group which is free from aliphatic substituents containing 6 or more carbon atoms;

Y is -O-, $-CH_2O-$ or -CO.O- ;

m + n is from 3 to 30;

p is from 1 to 3;

q is 1 or 2;

X is $-SO_4$ and r is 2-p or $-PO_4$ and r is 3-p

and M is H, $NH_4$, a substituted ammonium radical or an alkali metal.

2 A dispersion according to Claim 1 wherein in the dispersing agent R is a benzene ring or a pair of benzene rings which are fused or linked directly or indirectly and which may be substituted by a group selected from halo and lower ($C_1$ to $C_4$) alkyl.

3. A dispersion according to Claim 1 or Claim 2 wherein in the dispersing agent R is selected from the group comprising phenyl, tolyl, xylyl, chlorophenyl, phenylphenyl, diphenylene, 2,2-bis (4-phenylene)propane and naphthyl.

4. A dispersion according to any one of Claims 1 to 3 wherein in the dispersing agent M is the triethanolammonium radical or an alkali metal.

5. A dispersion according to any one of Claims 1 to 4 wherein in the dispersing agent X is $PO_4$.

6. A dispersion according to any one of Claims 1 to 5 wherein in the dispersing agent m is from 0 to 5 and n is from 4 to 10.

7. A dispersion according to anyone of Claims 1 to 6 wherein in the dispersing agent m is 0 and n is from 5 to 10.

8. A dispersion according to any one of Claims 1 to 7 wherein in the dispersing agent R is naphth-2-yl, Y is -O-, m is 0, n is 10, q is 1, p is 1, X is $PO_4$ and M is the triethanolammonium radical.

9. A dispersion according to any one of Claims 1 to 9 wherein the solid is a disperse dyestuff or a pigment.

10. A composition comprising a dispersion according to any one of Claims 1 to 9 and dipropylene glycol.

11. A print paste comprising a dispersion according to Claim 9 and a thickening agent.

RGP

9.12.81